# FASCICULE DE BREVET EUROPEEN

(11) **EP 1 924 424 B1**
(45) Date de publication et mention de la délivrance du brevet: **24.12.2008**
(21) Numéro de dépôt: 06795673.0
(22) Date de dépôt: 16.08.2006
(51) Int. Cl.: B29C 65/78, B65D 35/12, B65D 35/10, B29C 65/02

(54) **DISPOSITIF ET PROCEDE POUR LA FABRICATION DE RECIPIENTS TUBULAIRES**
VORRICHTUNG UND VERFAHREN ZUR HERSTELLUNG ROHRFÖRMIGER BEHÄLTER
DEVICE AND METHOD FOR MAKING TUBULAR CONTAINERS

(30) Priorité: 09.09.2005 EP 05108285
(43) Date de publication de la demande: 28.05.2008
(73) Titulaire: Aisapack Holding SA, 1896 Vouvry (CH)
(72) Inventeur: SANDER, Engelbert, CH-1896 Vouvry (CH)
(74) Mandataire: Grosfillier, Philippe
(86) Numéro de dépôt international: PCT/IB2006/052833
(87) Numéro de publication internationale: WO 2007/029127

(56) Documents cités:
- EP-A- 1 331 174
- WO-A-94/21537
- WO-A-20/05110720
- DE-C- 671 301
- US-A- 3 727 022
- PATENT ABSTRACTS OF JAPAN vol. 004, no. 076 (M-014), 3 juin 1980 (1980-06-03) -& JP 55 037395 A (KOATSU KAKO KK), 15 mars 1980 (1980-03-15)

## Description

### Domaine de l'invention

La présente invention se situe dans le domaine des récipients tubulaires en matière plastique qui sont constitués de trois éléments distincts, soit un corps flexible de forme tubulaire, un fond rigide et une pièce supérieure comportant un goulot.

L'invention concerne plus précisément un dispositif et un procédé permettant d'obtenir de tels récipients.

### Etat de la technique

On connaît par exemple de WO 94/21537 divers dispositifs permettant de réaliser des récipients tels que décrits dans le chapitre précédent.

Décrits de manière succincte, ces dispositifs comprennent un premier type de mandrin qui supporte le corps de forme tubulaire et sur lequel on fixe la pièce supérieure qui contient le goulot. L'ensemble constitué de ces deux éléments est ensuite acheminé sur un deuxième type de mandrin sur lequel on fixe le fond.

Les dispositifs de l'état de la technique sont cependant relativement complexes dans leur structure. De plus, le transfert d'un récipient en formation d'un type de mandrin à l'autre ralentit considérablement la durée de fabrication du récipient.

Par ailleurs, le positionnement du fond et/ou de la pièce supérieure est délicat à réaliser.

Il existe donc un besoin de simplifier les dispositifs de l'état de la technique et de raccourcir la durée de fabrication d'un récipient.

### Exposé général de l'invention

Le problème que la présente invention se propose de résoudre réside dans la relative complexité des dispositifs de l'état de la technique et de la relative longue durée de fabrication d'un récipient.

Dans l'invention, la solution du problème précité consiste à n'utiliser qu'un seul type de mandrin pour réaliser à la fois la fixation de la pièce supérieure et la fixation du fond sur le corps tubulaire.

Plus précisément, le dispositif selon l'invention comprend un mandrin et des moyens pour la fixation d'une pièce supérieure munie d'un goulot et d'un fond sur un corps flexible tubulaire. Le dispositif se caractérise par le fait qu'il est constitué d'au moins une unité de fabrication comprenant une tige-support possédant une extrémité libre munie d'un organe de retenue adapté pour empêcher le déplacement d'un fond de récipient selon une direction, un manchon tubulaire monté coulissant autour de la tige-support et comprenant une extrémité libre disposée du même côté que l'extrémité libre de la tige-support, un organe d'entraînement linéaire du manchon tubulaire, un espace adapté pour le déplacement relatif d'un corps de forme tubulaire autour du manchon tubulaire, ledit manchon tubulaire comprenant en outre un organe de saisie de pièce supérieure disposé vers l'extrémité libre du manchon, ledit organe de saisie de pièce supérieure comprenant des moyens de fixation et de retenue momentanée d'un ensemble constitué d'une pièce supérieure et d'un fond de récipient.

L'organe de saisie de pièce supérieure peut être de n'importe quel type. Selon un mode de réalisation de l'invention, les moyens de fixation et de retenue sont constitués d'un pas de vis.

Avantageusement, l'organe d'entraînement du manchon tubulaire est du type pneumatique mais tout autre type d'entraînement approprié peut être utilisés

De préférence, le dispositif comprend plusieurs unités de fabrication.
Selon un mode de réalisation, les unités de fabrication sont disposées le long d'un cercle.

Selon une variante de l'invention, la pièce supérieure et le fond sont initialement fixés l'un à l'autre, ce qui permet de les introduire dans le dispositif en une seule opération.
La fixation initiale du fond à la pièce supérieure offre en outre d'autres avantages. L'ensemble ainsi constitué est plus rigide que le fond pris isolément, ce qui permet d'augmenter la stabilité du fond lors de son soudage au corps tubulaire. Inversement, si le fond n'était pas fixé initialement à la pièce supérieure, un renforcement de celui-ci serait nécessaire, p.ex. en ajoutant des ailettes latérales.
Le fond serait donc plus lourd, plus complexe à réaliser et donc plus onéreux.

### Exposé détaillé de l'invention

L'invention est décrite plus en détail ci-après au moyen d'exemples illustrés par les figures suivantes :
La figure 1 présente les éléments séparés d'un récipient pouvant être utilisé avec le dispositif selon l'invention.
La figure 2 présente les éléments de la figure lorsqu'ils sont assemblés.
La figure 3 présente un ensemble constitué d'un fond et d'une pièce supérieure.
La figure 4 présente une coupe longitudinale d'unité de fabrication selon l'invention.
La figure 5 montre la fixation de l'ensemble de la figure 3 sur l'unité de fabrication.
La figure 6 montre le chargement d'un corps tubulaire.
La figure 7 illustre le soudage du fond sur le corps tubulaire.
La figure 8 montre le déplacement de la pièce supérieure vers sa position finale.
La figure 9 illustre le soudage de la pièce supérieure sur le corps tubulaire.
La figure 10 montre le début du retrait d'un récipient de l'unité de fabrication.
La figure 11 montre la fin du retrait d'un récipient de l'unité de fabrication.
La figure 12 est une vue frontale simplifiée d'un plateau tournant comportant plusieurs unités de fabrication.

Liste des références numériques :
1. Récipient tubulaire
2. Corps tubulaire
3. Fond rigide
4. Pièce supérieure
5. Mandrin
6. Elément de fixation de pièce supérieure sur le corps tubulaire
7. Elément de fixation de fond sur le corps tubulaire
8. Goulot
9. Tige-support
10. Extrémité libre de la tige-support
11. Organe de retenue
12. Manchon tubulaire
13. Extrémité libre du manchon tubulaire
14. Espace pour recevoir un corps tubulaire
15. Organe de saisie de pièce supérieure
16. Elément de fixation de pièce supérieure
17. Plateau tournant
18. Mécanisme de fixation fond-pièce supérieure
19. Conduit pour le passage de fluide
20. Orifice d'aspiration/expiration
21. Espace de logement de fluide

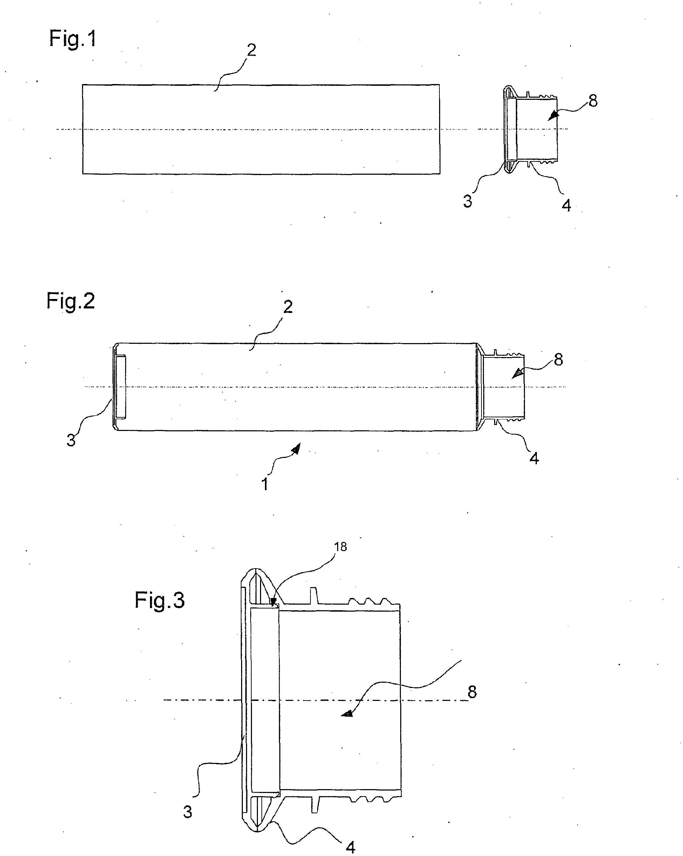

La figure **1** illustre les trois éléments constitutifs d'un récipient **1** pouvant être utilisés avec le dispositif selon l'invention, à savoir un corps tubulaire flexible **2**, p.ex. un tube laminé, un fond rigide **3** et une pièce supérieure **4** comportant un goulot **8**. Dans une première phase, le fond **3** est fixé à la pièce supérieure **4** au moyen d'un mécanisme **18** du type snap-fit (voir figure 3). Tout autre système de fixation momentanée peut bien entendu être utilisé. Selon une variante non-illustrée de l'invention, la pièce supérieure et le fond sont fabriqués initialement en une seule pièce par injection, les deux éléments étant ensuite séparés au cours du procédé de fabrication, p.ex. par cassure de liaisons temporaires. Comme on le verra par la suite, le fond **3** est ensuite séparé de la pièce supérieure **4** lors du procédé de fabrication. La figure 2 montre un récipient **1** dans sa configuration au terme du procédé de fabrication. Le fond **3** a été soudé au niveau de l'extrémité inférieure du corps tubulaire **2** et la pièce supérieure **4** a été soudée au niveau de l'extrémité supérieure du corps tubulaire **2**.

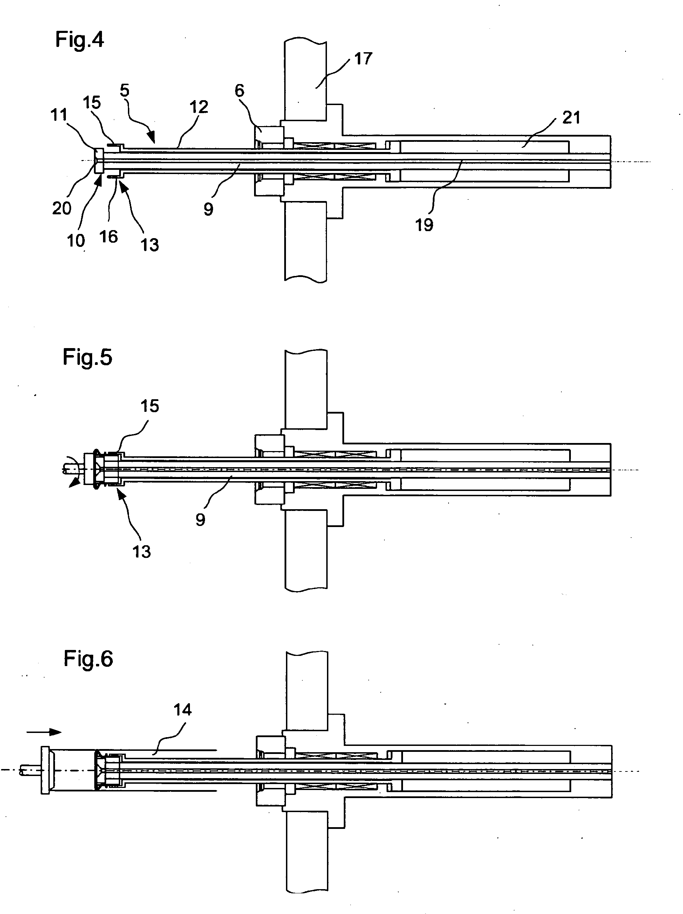

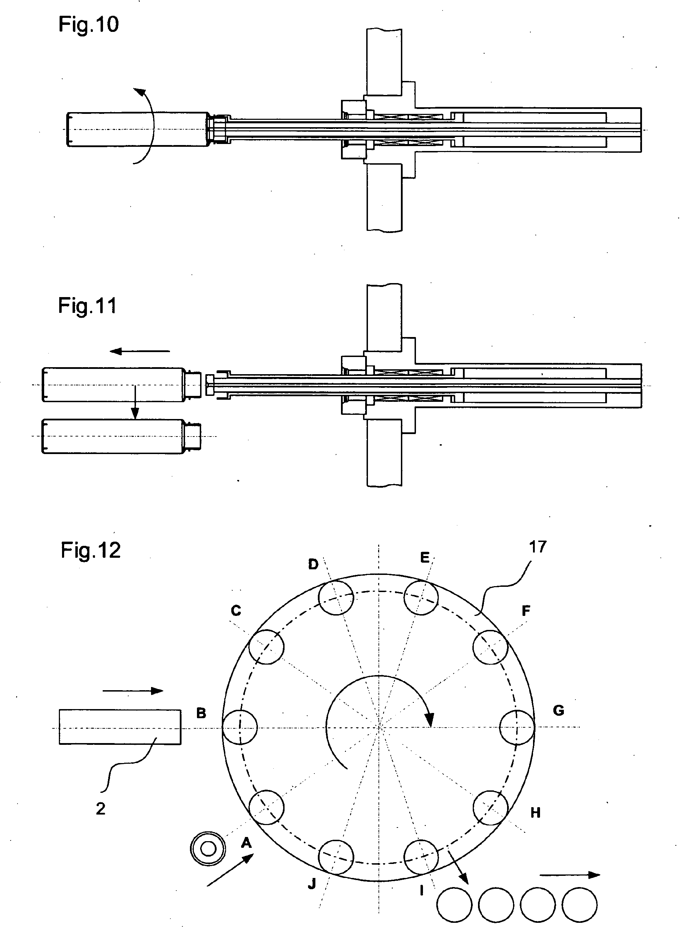

La figure 4 montre une unité de fabrication fixée à un plateau tournant **17** (voir figure 12). Elle est constituée d'une tige-support **9** entourée d'un manchon **12** monté coulissant sur la tige-support **9** et comportant une extrémité libre **13** munie d'un organe **15** permettant de saisir et fixer une pièce supérieure **4.** La tige-support **9** comporte un conduit interne **19** permettant d'acheminer un fluide, un gaz de préférence, vers ou en provenance de l'extrémité libre **10** de la tige-support **9.** L'extrémité libre **10** de la tige-support **9** comporte un organe de retenue **11** comprenant un orifice **20** au travers duquel débouche le conduit interne **19.** La géométrie de l'orifice **20** (un cône évasé de préférence), est choisie d'assurer une bonne adhésion, par aspiration, du fond 3 sur l'organe de retenue **11.**

Au niveau du plateau tournant **17,** un élément de fixation de pièce supérieure **6** comprenant un système de chauffage, p.ex. HF, entoure l'ensemble constitué de la tige-support **9** et du manchon **12.**

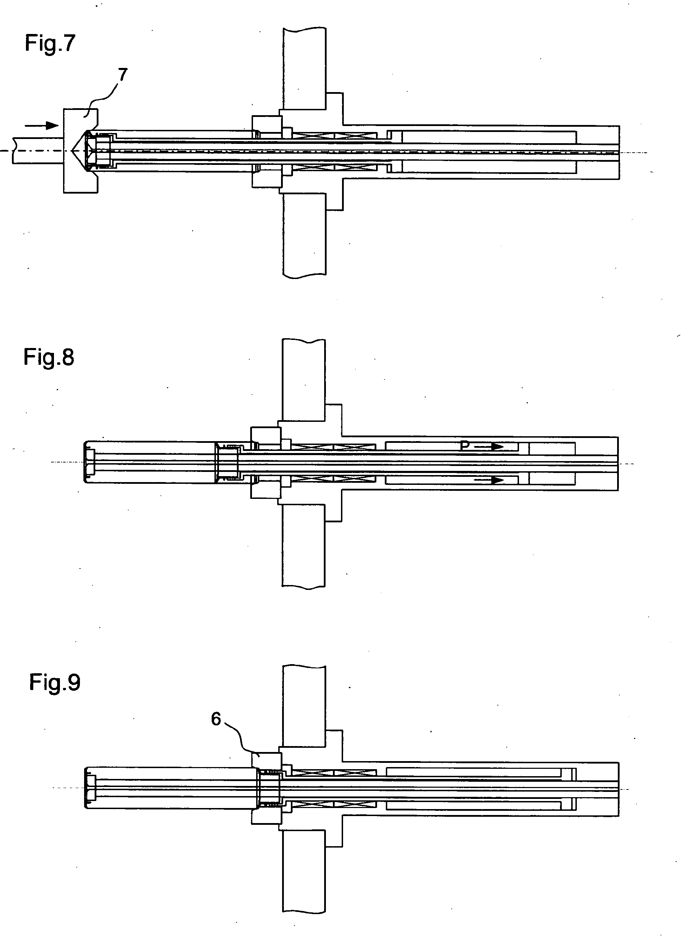

Les figures 5 à 11 illustrent différentes étapes de fabrication d'un récipient **1** au moyen de l'unité de fabrication présentée sur la figure 1.
Dans une première étape (voir figure 5), on fixe un ensemble pièce supérieure **4 -** fond **3** sur l'extrémité libre **13** du manchon **12.** La fixation se fait par vissage du col de la pièce supérieure dans un pas de vis **16.**
Dans une deuxième étape (voir figure 6), on charge un corps tubulaire **2** autour du manchon **12.** Un espace **14** est prévu à cet effet. On notera qu'au terme de cette étape, l'ensemble pièce supérieure **4 -** fond 3 se situe dans la partie inférieure du corps tubulaire **2** (tout à gauche sur la figure).
Dans une troisième étape (figure 7), on positionne un système de soudage **7** vers l'extrémité inférieur du corps tubulaire **2** et l'on soude le fond **3** sur le corps tubulaire **2.**
Dans une quatrième étape (figure 8) on déplace le manchon **12** en direction de l'extrémité supérieure du corps tubulaire **2**. Cette opération entraîne le déplacement de la pièce supérieure **4** qui est fixée au manchon **12** mais pas celui du fond qui reste en place au moyen de l'organe de retenue **11.**
Selon une variante non-illustrée de l'invention, la quatrième étape a lieu avant la troisième étape.

Dans une cinquième étape (figure 9), une fois que la pièce supérieure **4** a atteint sa position finale par rapport au corps tubulaire **2,** on la soude à ce dernier au moyen de l'élément de fixation **6** qui comporte un système de soudage.

Dans une sixième étape (figure 10), on dévisse la pièce supérieure **4** du manchon **12.**

Enfin (figure 11), on retire le récipient **1** de l'unité de fabrication.

La figure **12** montre une vue schématique d'un plateau tournant comportant plusieurs unités de fabrication. Les unités de fabrication sont regroupées en stations, chaque station effectuant une des six étapes décrites plus haut.

Dans l'exemple illustré, deux corps tubulaires **2** sont chargés simultanément sur le plateau tournant **17**.

Sur la figure 12, chaque station est représentée par une lettre, conformément à la liste reproduite ci-dessus
A Charge pièce supérieure/fond rigid
B Charge corps tubulaire
C Positionnement corps tubulaire
D Prétraitement du fond par air chaud
E Soudage par haute fréquence du fond
F Soudage par haute fréquence de la pièce supérieure
G Soudage par haute fréquence de la pièce supérieure
H Soudage par haute fréquence de la pièce supérieure
l Déchargement du récipient
J Station libre (Contôle de déchargement)

## Revendications

1. Dispositif pour la fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit dispositif comprenant un mandrin (5) et des moyens (6,7) pour la fixation d'une pièce supérieure (4) et d'un fond (3) sur un corps flexible tubulaire (2), **caractérisé en ce qu'**il est constitué d'au moins une unité de fabrication comprenant une tige-support (9) possédant une extrémité libre (10) munie d'un organe de retenue (11) adapté pour empêcher le déplacement d'un fond de récipient (3) selon une direction, un manchon tubulaire (12) monté coulissant autour de la tige-support (9) et comprenant une extrémité libre (13) disposée du même côté que l'extrémité libre (10) de la tige-support (9), un organe d'entraînement linéaire du manchon tubulaire (12), un espace (14) adapté pour le déplacement relatif d'un corps de forme tubulaire (2) autour du manchon tubulaire (12), ledit manchon tubulaire (12) comprenant en outre un organe de saisie de pièce supérieure (15) disposé vers l'extrémité libre (13) du manchon (12), ledit organe de saisie de pièce supérieure (15) comprenant des moyens de fixation et de retenue momentanée (16) d'un ensemble constitué d'une pièce supérieure (4) et d'un fond (3) de récipient (1).

2. Dispositif selon la revendication 1 où les moyens de fixation et de retenue momentanée (16) sont un pas de vis (16).

3. Dispositif selon la revendication 1 ou 2 **caractérisé en ce que** l'organe d'entraînement du manchon tubulaire (12) est du type pneumatique.

4. Dispositif selon l'une quelconque des revendications précédentes comprenant plusieurs unités de fabrication adjacentes disposées le long d'un cercle.

5. Dispositif selon la revendication précédente comprenant un élément en forme de plateau tournant (17) comportant un ensemble d'unités de fabrication disposées selon une direction perpendiculaire au plan du plateau tournant (17).

6. Dispositif selon la revendication précédente comprenant plusieurs stations de travail, chaque station étant constituée d'au moins une unité de fabrication.

7. Ensemble de matière plastique constitué d'un fond rigide (3) et d'une pièce supérieure (4) comportant un goulot (8), ledit ensemble étant adapté pour être utilisé avec le dispositif selon l'une quelconque des revendications précédentes, **caractérisé en ce que** le fond rigide (3) comporte une partie destinée à contacter un organe de retenue (11), **en ce que** la pièce supérieure (4) comporte une partie destinée à être saisie par un organe de saisie (15), ledit ensemble comprenant par ailleurs des moyens de fixation (18) adaptés pour fixer momentanément le fond (3) à la pièce supérieure (4) ou vice-versa.

8. Ensemble selon la revendication précédente **caractérisé en ce que** les moyens de fixation (18) sont du type snap-fit.

9. Procédé de fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit procédé comprenant les étapes successives suivantes :
- fixation d'une pièce supérieure (4) sur l'extrémité libre (13) d'un manchon tubulaire (12) monté coulissant sur une tige-support (9),
- fixation d'un fond (3) au niveau d'un organe de retenue (11) disposé sur l'extrémité libre (10) de la tige-support (9),
- chargement d'un corps tubulaire (2) autour du manchon tubulaire (12),
- soudage du fond (3) sur le corps tubulaire (2),
- retenue du fond (3) et entraînement de la pièce supérieure (4) par déplacement du manchon tubulaire (12) en direction de l'extrémité du corps (2) qui est opposée à celle où se trouve le fond (3),
- soudage de la pièce supérieure (4) sur le corps tubulaire (2),
- retrait du récipient (1) de l'ensemble tige-support (9)/manchon tubulaire (12).

10. Procédé selon la revendication 9 **caractérisé en ce que** l'on fixe le fond (3) sur la pièce supérieure (4).

11. Procédé selon la revendication 9 **caractérisé en ce que** l'on fixe le fond (3) sur l'organe de retenue (11).

12. Procédé selon la revendication 11 où l'on fixe le fond (3) par aspiration sur l'organe de retenue (11).

13. Procédé de fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit procédé comprenant les étapes successives suivantes :
- fixation du fond rigide (3) sur la pièce supérieure (4),
- fixation de l'ensemble pièce supérieure (4) - fond (3) sur l'extrémité libre (13) d'un manchon tubulaire (12) monté coulissant sur une tige-support (9),
- chargement d'un corps tubulaire (2) autour du manchon tubulaire (12),
- soudage du fond (3) sur le corps tubulaire (2),
- retenue du fond (3) et entraînement de la pièce supérieure (4) par déplacement du manchon tubulaire (12) en direction de l'extrémité du corps (2) qui est opposée à celle où se trouve le fond (3),
- soudage de la pièce supérieure (4) sur le corps tubulaire (2),
- retrait du récipient (1) de l'ensemble tige-support (9) / manchon tubulaire (12),

## Claims

1. Device for fabricating tubular containers made from plastics material (1) and consisting of three distinct elements, namely:
- a flexible tubular body (2),
- a rigid base (3),
- a top part (4) including a neck (8),
the said device comprising a mandrel (5) and means (6, 7) for fixing a top part (4) and a base (3) to a flexible tubular body (2), **characterized in that** it consists of at least one fabrication unit comprising a support shaft (9) having a free end (10) provided with a retaining member (11) adapted to prevent the movement of a container base (3) in one direction, a tubular sleeve (12) mounted slidably around the support shaft (9) and having a free end (13) located on the same side as the free end (10) of the support shaft (9), a member for driving the tubular sleeve (12) in a linear way, and a space (14) adapted for the relative movement of a tubular body (2) around the tubular sleeve (12), the said tubular sleeve (12) additionally comprising a top part grip member (15) located near the free end (13) of the sleeve (12), the said top part grip member (15) comprising means for the instantaneous fixing and retention (16) of an assembly consisting of a top part (4) and a base (3) of a container (1).

2. Device according to Claim 1, in which the instantaneous fixing and retaining means (16) consist of a screw thread (16).

3. Device according to Claim 1 or 2, **characterized in that** the member for driving the tubular sleeve (12) is of the pneumatic type.

4. Device according to any one of the preceding claims, comprising a plurality of adjacent fabrication units positioned along a circle.

5. Device according to the preceding claim, comprising an element in the form of a rotating plate (17) including a set of fabrication units positioned along a direction perpendicular to the plane of the rotating plate (17).

6. Device according to the preceding claim, comprising a plurality of operating stations, each station consisting of at least one fabrication unit.

7. Assembly made from plastics material, consisting of a rigid base (3) and a top part (4) including a neck (8), the said assembly being adapted to be used with the device according to any one of the preceding claims, **characterized in that** the rigid base (3) includes a part for contacting a retaining member (11), and **in that** the top part (4) includes a part to be gripped by a gripping member (15), the said assembly also comprising fixing means (18) adapted to fix the base (3) instantaneously to the top part (4) or vice versa.

8. Assembly according to the preceding claim, **characterized in that** the fixing means (18) are of the snap-fit type.

9. Method for fabricating tubular containers made from plastics material (1) and consisting of three distinct elements, namely:
- a flexible tubular body (2),
- a rigid base (3),
- a top part (4) including a neck (8),
the said method comprising the following successive steps:
- fixing a top part (4) to the free end (13) of a tubular sleeve (12) mounted slidably on a support shaft (9),
- fixing a base (3) to a retaining member (11) positioned on the free end (10) of the support shaft (9),
- fitting a tubular body (2) around the tubular sleeve (12),
- welding the base (3) to the tubular body (2),
- retaining the base (3) and driving the top part (4) by moving the tubular sleeve (12) towards the end of the body (2) opposite the end where the base (3) is located,
- welding the top part (4) to the tubular body (2),
- withdrawing the container (1) from the assembly consisting of the support shaft (9) and the tubular sleeve (12).

10. Method according to Claim 9, **characterized in that** the base (3) is fixed to the top part (4).

11. Method according to Claim 9, **characterized in that** the base (3) is fixed to the retaining member (11).

12. Method according to Claim 11, in which the base (3) is fixed by suction to the retaining member (11).

13. Method of fabricating tubular containers made from plastics material (1) and consisting of three distinct elements, namely:
- a flexible tubular body (2),
- a rigid base (3),
- a top part (4) including a neck (8), the said method comprising the following successive steps:
- fixing the rigid base (3) to the top part (4),
- fixing the assembly consisting of the top part (4) and base (3) to the free end (13) of a tubular sleeve (12) mounted slidably on a support shaft (9),
- fitting a tubular body (2) around the tubular sleeve (12),
- welding the base (3) to the tubular body (2),
- retaining the base (3) and driving the top part (4) by moving the tubular sleeve (12) towards the end of the body (2) opposite the end where the base (3) is located,
- welding the top part (4) to the tubular body (2),
- withdrawing the container (1) from the assembly consisting of the support shaft (9) and the tubular sleeve (12).

## Patentansprüche

1. Vorrichtung zur Herstellung rohrförmiger Behälter (1) aus Kunststoff, die aus drei verschiedenen Elementen bestehen:
- einem flexiblen rohrförmigen Körper (2),
- einem starren Boden (3),
- einem einen Hals (8) aufweisenden oberen Teil (4),
wobei die Vorrichtung einen Dorn (5) und Mittel (6, 7) zur Befestigung eines oberen Teils (4) und eines Bodens (3) an einem flexiblen rohrförmigen Körper (2) aufweist, **dadurch gekennzeichnet, dass** sie aus mindestens einer Fertigungseinheit besteht, die eine Stützstange (9), welche ein freies Ende (10) besitzt, das mit einem Halteglied (11) versehen ist, das zum Verhindern der Bewegung eines Bodens (3) des Behälters in einer Richtung ausgeführt ist, eine rohrförmige Buchse (12), die verschiebbar um die Stützstange (9) herum angebracht ist und ein freies Ende (13) aufweist, das auf der gleichen Seite wie das freie Ende (10) der Stützstange (9) angeordnet ist, ein Linearantriebsglied für die rohrförmige Buchse (12) und einen Raum (14), der zur relativen Verschiebung eines rohrförmigen Körpers (2) um die rohrförmige Buchse (12) ausgeführt ist, umfasst, wobei die rohrförmige Buchse (12) des Weiteren ein Glied (15) zum Ergreifen des oberen Teils aufweist, das zum freien Ende (13) der Buchse (12) hin angeordnet ist, wobei das Glied zum Ergreifen des oberen Teils (15) Mittel (16) zum vorübergehenden Befestigen und Halten einer Anordnung umfasst, die aus einem oberen Teil (4) und einem Boden (3) eines Behälters (1) besteht.

2. Vorrichtung nach Anspruch 1, bei der die Mittel (16) zum vorübergehenden Befestigen und Halten ein Schraubengang (16) sind.

3. Vorrichtung nach Anspruch 1 oder 2, **dadurch gekennzeichnet, dass** das Antriebsglied für die rohrförmige Buchse (12) pneumatischer Art ist.

4. Vorrichtung nach einem der vorhergehenden Ansprüche, die mehrere benachbarte Fertigungseinheiten umfasst, die in einem Kreis angeordnet sind.

5. Vorrichtung nach dem vorhergehenden Anspruch, die ein die Form eines Drehtellers (17) aufweisendes Element umfasst, das eine Anordnung aus Fertigungseinheiten aufweist, die in einer senkrecht zur Ebene des Drehtellers (17) verlaufenden Richtung angeordnet sind.

6. Vorrichtung nach dem vorhergehenden Anspruch, die mehrere Arbeitsstationen aufweist, wobei jede Station aus mindestens einer Fertigungseinheit besteht.

7. Anordnung aus Kunststoffmaterial, die aus einem starren Boden (3) und einem einen Hals (8) aufweisenden oberen Teil (4) besteht, wobei die Anordnung zur Verwendung mit der Vorrichtung nach einem der vorhergehenden Ansprüche ausgeführt ist, **dadurch gekennzeichnet, dass** der starre Boden (3) einen Teil aufweist, der ein Halteglied (11) berühren soll, und der obere Teil (4) einen Teil aufweist, der von einem Greifglied (15) ergriffen werden soll, wobei die Anordnung des Weiteren Befestigungsmittel (18) aufweist, die zur vorübergehenden Befestigung des Bodens (3) an dem oberen Teil (4) oder umgekehrt ausgeführt sind.

8. Anordnung nach dem vorhergehenden Anspruch, **dadurch gekennzeichnet, dass** die Befestigungsmittel (18) der Einrastart sind.

9. Verfahren zur Herstellung von rohrförmigen Behältern (1) aus Kunststoffmaterial, die aus drei verschiedenen Elementen bestehen:
- einem flexiblen rohrförmigen Körper (2),
- einem starren Boden (3),
- einem einen Hals (8) aufweisenden oberen Teil (4),
wobei das Verfahren die folgenden aufeinander folgenden Schritte umfasst:
- Befestigen eines oberen Teils (4) an dem freien Ende (13) einer verschiebbar auf einer Stützstange (9) angebrachten rohrförmigen Buchse (12),
- Befestigen eines Bodens (3) an dem auf dem freien Ende (10) der Stützstange (9) angeordneten Halteglied (11),
- Anbringen eines rohrförmigen Körpers (2) um die rohrförmige Buchse (12) herum,
- Verschweißen des Bodens (3) mit dem rohrförmigen Körper (2),
- Halten des Bodens (3) und Mitnahme des oberen Teils (4) durch Verschieben der rohrförmigen Buchse (12) in Richtung des Endes des Körpers (2), das dem, wo sich der Boden (3) befindet, entgegengesetzt ist,
- Verschweißen des oberen Teils (4) mit dem rohrförmigen Körper (2),
- Herausziehen des Behälters (1) aus der aus Stützstange (9) und der rohrförmigen Buchse (12) bestehenden Anordnung.

10. Verfahren nach Anspruch 9, **dadurch gekennzeichnet, dass** der Boden (3) an dem oberen Teil (4) befestigt wird.

11. Verfahren nach Anspruch 9, **dadurch gekennzeichnet, dass** der Boden (3) an dem Halteglied (11) befestigt wird.

12. Verfahren nach Anspruch 11, bei dem der Boden (3) durch Saugwirkung an dem Halteglied (11) befestigt wird.

13. Verfahren zur Herstellung von rohrförmigen Behältern (1) aus Kunststoffmaterial, die aus drei verschiedenen Elementen bestehen:
- einem flexiblen rohrförmigen Körper (2),
- einem starren Boden (3),
- einem einen Hals (8) aufweisenden oberen Teil (4),
wobei das Verfahren die folgenden aufeinander folgenden Schritte umfasst:
- Befestigen des starren Bodens (3) an dem oberen Teil (4),
- Befestigen der aus dem oberen Teil (4) und dem Boden (3) bestehenden Anordnung an dem freien Ende (13) einer verschiebbar auf einer Stützstange (9) angebrachten rohrförmigen Buchse (12),
- Anbringen eines rohrförmigen Körpers (2) um die rohrförmige Buchse (12) herum,
- Verschweißen des Bodens (3) mit dem rohrförmigen Körper (2),
- Halten des Bodens (3) und Mitnahme des oberen Teils (4) durch Verschieben der rohrförmigen Buchse (12) in Richtung des Endes des Körpers (2), das dem, wo sich der Boden (3) befindet, entgegengesetzt ist,
- Verschweißen des oberen Teils (4) mit dem rohrförmigen Körper (2),
- Zurückziehen des Behälters (1) aus der aus der Stützstange (9) und der rohrförmigen Buchse (12) bestehenden Anordnung.
